Europäisches Patentamt

**European Patent Office**

**Office européen des brevets**

(19)

(11) Veröffentlichungsnummer: **0 209 002**
**B1**

(12) # EUROPÄISCHE PATENTSCHRIFT

(45) Veröffentlichungstag der Patentschrift:
**28.11.90**

(21) Anmeldenummer: **86109053.8**

(22) Anmeldetag: **03.07.86**

(51) Int. Cl.⁵: **B65D 65/16,** B65D 65/40,
B32B 27/32, B32B 15/02,
G03C 3/00

(54) **Verbundfolie zur Herstellung von Verpackungen.**

(30) Priorität: **19.07.85 DE 3525787**

(43) Veröffentlichungstag der Anmeldung:
**21.01.87 Patentblatt 87/4**

(45) Bekanntmachung des Hinweises auf die Patenterteilung:
**28.11.90 Patentblatt 90/48**

(84) Benannte Vertragsstaaten:
**AT BE CH DE FR GB IT LI NL SE**

(56) Entgegenhaltungen:
**DE-A- 2 719 113**
**FR-A- 2 126 123**
**US-A- 4 576 865**

(73) Patentinhaber: **UNILEVER NV, Burgemeester
s'Jacobplein 1 P.O. Box 760, NL-3000 DK Rotterdam(NL)**

(84) Benannte Vertragsstaaten: **BE CH DE FR IT LI NL SE AT**

(73) Patentinhaber: **UNILEVER PLC, Unilever House
Blackfriars P.O. Box 68, London EC4P 4BQ(GB)**

(84) Benannte Vertragsstaaten: **GB**

(72) Erfinder: **Holzmüller, Arno, Hanebergstrasse 6,
D-8960 Kempten(DE)**

(74) Vertreter: **Hutzelmann, Gerhard et al, Duracher
Strasse 22, D-8960 Kempten/Allgäu(DE)**

## Beschreibung

Die Erfindung betrifft eine Verbundfolie zur Herstellung von Verpackungen für lichtempfindliche Güter, insbesondere Vakuumverpackungen für fotografische Materialien, mit einer Außenschicht aus Kunststoffolie, einer Innenschicht aus Polyäthylen und einer Mittelschicht aus Metall, die durch Metallisieren der Außenschicht gebildet ist.

Verbundfolien dieser Art müssen verschiedene Forderungen erfüllen; sie sollen lichtdicht sein, ihre Innenlagen sollen zur Bildung von Verpackungen gegen sich selbst versiegelbar und zur Schonung der verpackten Materialien möglichst glatt sein. Eine weitere Forderung ist, daß die Verbunde möglichst kostengünstig hergestellt werden können.

Aus der FR-A 2 126 123 ist bereits eine derartige Verbundfolie bekannt, bei der jedoch zur Erreichung einer ausreichenden Lichtdichtigkeit eine verhältnismäßig dicke Metallschicht notwendig wäre.

Darüber hinaus ist es aus JP-A 59 068 238 bekannt, zum Erzielen einer lichtdichten Folie Kunststoffe miteinander zu vermischen, wodurch sie vor allem in Verbindung mit Papier oder ähnlichem eine entsprechende Dichtigkeit erzielen.

Derartige Folien sind aber zum einen nicht ausreichend lichtdicht und zum anderen schwierig herzustellen.

Zur Lösung dieser Vielzahl von Anforderungen wird erfindungsgemäß vorgeschlagen, daß die Innenschicht der eingangs aufgezeigten Verbundfolie aus zwei miteinander coextrudierten Lagen aus Polyäthylen besteht, von denen die der Metallschicht zugewandte Lage dunkel eingefärbt und die damit coextrudierte Lage transparent ausgebildet ist.

Diese zweilagige Innenschicht aus miteinander coextrudierten Polyäthylen-Lagen führt zu einer völlig glatten Innenlage des Verpackungsmaterials. Wegen der geforderten Lichtdichtigkeit muß die Polyäthylenschicht nämlich mit Hilfe von geeigneten Stoffen dunkel eingefärbt werden; diese Zusätze führen zu Unregelmäßigkeiten, wie z.B. Stippen in der Kunststoffschicht. Eine solche unregelmäßige Oberfläche wird durch die mit der eingefärbten Polyäthylenlage coextrudierte, farblose Polyäthylenlage ausgeglichen und damit geglättet. Eine so glatte Innenfläche des Verpackungsmaterials ist vor allem dann günstig, wenn z.B. Röntgenfilme in Vakuumverpackungen abgepackt und in Stapeln übereinander gelagert werden. Jede Unregelmäßigkeit des Verpackungsmaterials würde sich dabei auf die Oberfläche des Films durchdrücken und zu Flecken auf dem entwickelten Filmmaterial führen.

Eine bevorzugte Ausgestaltung der erfindungsgemäßen Verbundfolie ist dadurch gekennzeichnet, daß die Außenschicht aus Polyester besteht und die Mittelschicht aus Metall durch Metallisieren dieser Außenschicht mit Aluminium gebildet ist.

Eine Verpackung, z.B. ein Schlauchbeutel aus einer solchen Verbundfolie, weist eine besonders widerstandsfähige, kratzfeste und wegen der silbernen Farbe der Aluminiummetallisierung dekorative Oberfläche auf.

Besonders günstige Eigenschaften weist die erfindungsgemäße Verbundfolie dann auf, wenn die transparente Lage der zweilagigen coextrudierten Innenschicht aus Polyäthylen Zusätze von Polybuten enthält. Diese Zusätze gestatten zwar einerseits, daß eine ausreichende Siegelkraft zur Verfügung steht, durch welche die Verpackung dicht verschlossen werden kann, andererseits gewährleisten sie aber ein leichtes Öffnen durch einfaches Aufziehen der Siegelnaht des Verpackungsbeutels in der Dunkelkammer.

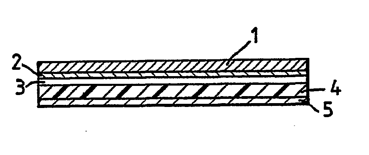

In der Zeichnung ist ein Ausführungsbeispiel der erfindungsgemäßen Verbundfolie dargestellt.

Die Außenschicht 1 besteht aus einer 23 µm starken Polyesterfolie, die eine aufmetallisierte Schicht 2 aus Aluminium trägt. Diese metallisierte Polyesterfolie ist mit Hilfe eines Kaschierklebers 3 auf der Aluminiumseite mit einer Innenschicht verbunden, die aus zwei miteinander coextrudierten Lagen 4, 5 aus Polyäthylen besteht. Dabei ist die der Aluminiumschicht 2 zugewandte, 65µm starke Polyäthylenlage schwarz eingefärbt, die damit coextrudierte, 15µm starke Polyäthylenlage 5 enthält 12% Polybuten.

## Patentansprüche

1. Verbundfolie zur Herstellung von Verpackungen für lichtempfindliche Güter, insbesondere Vakuumverpackungen für fotografische Materialien, mit einer Außenschicht aus Kunststoffolie, einer Innenschicht aus Polyäthylen und einer Mittelschicht aus Metall, die durch Metallisieren der Außenschicht gebildet ist, dadurch gekennzeichnet, daß die Innenschicht aus zwei miteinander coextrudierten Lagen aus Polyäthylen besteht, von denen die der Metallschicht zugewandte Lage dunkel eingefärbt und die damit coextrudierte Lage transparent ausgebildet ist.

2. Verbundfolie nach Anspruch 1, dadurch gekennzeichnet, daß die Außenschicht aus Polyester besteht und die Mittelschicht aus Metall durch Metallisieren dieser Außenschicht mit Aluminium gebildet ist.

3. Verbundfolie nach Anspruch 1 oder 2, dadurch gekennzeichnet, daß die transparente Lage der zweilagigen coextrudierten Innenschicht aus Polyäthylen Zusätze von Polybuten enthält.

## Claims

1. Multilayer film for the production of packs for light-sensitive products, particularly vacuum packs for photographic materials, with an outer layer made of plastic film, an inner layer made of polyethylene and a middle layer made of metal, which is produced by metallising the outer layer, wherein the inner layer consists of two layers of polyethylene coextruded together, where the layer facing the metal layer is coloured dark and the layer coextruded to it is transparent.

2. Multilayer film according to claim 1, wherein the outer layer is made of polyester and the middle layer of metal is produced by metallising this outer layer with aluminium.

3. Multilayer film according to claim 1 or 2, wherein the transparent layer of the coextruded two-layer polyethylene inner layer contains polybutene additives.

## Revendications

1. Pellicule multicouche pour la fabrication d'emballages pour articles sensibles à la lumière, en particulier d'emballages sous vide pour matériaux photographiques, avec une couche externe faite d'une feuille de matière synthétique, une couche interne faite de polyéthylène et une couche médiane de métal, qui est formée par métallisation de la couche externe, caractérisée en ce que la couche interne se compose de deux couches de polyéthylène coextrudées l'une avec l'autre, parmi lesquelles la couche orientée vers la couche métallique a une coloration foncée et la couche coextrudée avec elle est transparente.

2. Pellicule multicouche selon la revendication 1, caractérisée en ce que la couche externe se compose de polyester et en ce que la couche médiane est formée de métal par métallisation de cette couche externe avec de l'aluminium.

3. Pellicule multicouche selon la revendication 1 ou 2, caractérisée en ce que la partie transparente de la couche interne de polyéthylène à deux couches coextrudées contient des additifs de polybutène.